# EUROPÄISCHE PATENTSCHRIFT

(11) **EP 1 578 096 B1**
(45) Veröffentlichungstag und Bekanntmachung des Hinweises auf die Patenterteilung: **18.05.2011**
(21) Anmeldenummer: 05004409.8
(22) Anmeldetag: 01.03.2005
(51) Int. Cl.: H04M 3/22, H04Q 3/00

(54) **Verfahren zum Betrieb und zur Konfiguration eines Telekommunikationssystems mit Dispatcher-Software zur Identifizierung von Kunden, sowie Telekommunikationsanlage**
Method for operation and configuration of a telecommunications system with dispatcher software for identification of customers, and telecommunications system
Procédé pour l'opération et la configuration d'un système de télécommunications avec logiciel de répartition pour l'identification de clients, et système de télécommunications

(30) Priorität: 17.03.2004 DE 102004013392
(43) Veröffentlichungstag der Anmeldung: 21.09.2005
(73) Patentinhaber: Tenovis GmbH & Co. KG, 60326 Frankfurt am Main (DE)
(72) Erfinder: Rodewald, Frank, 50181 Bedburg (DE); Rauth, Hermann, 46145 Oberhausen (DE); Kayser, Udo, 42285 Wuppertal (DE)
(74) Vertreter: Hafner-Tergau-Walkenhorst

(56) Entgegenhaltungen:
- EP-A- 0 557 644
- WO-A-01/84860
- WO-A-96/11544
- US-A- 5 539 817
- RICHTER L: "INTELLIGENTE PRIVATE TELEKOMMUNIKATIONSNETZE" NTZ NACHRICHTENTECHNISCHE ZEITSCHRIFT, Bd. 47, Nr. 11, November 1994 (1994-11), Seiten 782-785, XP000479977 ISSN: 0948-728X

## Beschreibung

Die Erfindung betrifft ein Verfahren zum Betrieb und zur Konfiguration eines Telekommunikationssystems, eine Dispatcher-Software zur Identifizierung eines Kunden in einem Telefonsystem und eine Telekommunikationsanlage mit dieser Dispatcher-Software, wobei mehrere Kunden mit jeweils einer Vielzahl von Endgeräten den Verbund unabhängig voneinander nutzen können.

Telefonanlagen stellen den an sie angeschlossenen Teilnehmern bzw. Endgeräten Leistungsmerkmale zur Verfügung. Große private Telekommunikationsanlagen erreichen heute Ausbaustufen von über 10.000 Teilnehmern. Werden diese Telekommunikationsanlagen vernetzt, z.B. über QSIG, so können Kommunikationssysteme entstehen, deren beherrschbare Teilnehmerzahl nur noch durch die maximal zulässige Länge der signalisierbaren Rufnummern begrenzt wird. Telekommunikationsanlagen dieser Größenordnungen bieten nicht nur ein breites Spektrum von vermittlungstechnischen Leistungsmerkmalen, welches die Mögiichkeiten kleiner Telekommunikationssysteme bei Weitem übersteigt, sie bieten darüber hinaus Zugang zu serverbasierten Applikationen wie CTI (Computer Telephony Integration), CRM (Customer Relations Management) und Call Center.

Die Leistungsmerkmale der Telefonanlagen sind unterschiedlich aufwändig zu implementieren. Komplizierte vermittlungstechnische Leistungsmerkmale und serverbasierte Applikationen erfordern einen großen Realisierungsaufwand, der sich für kleinere Anschlusszahlen oft als unwirtschaftlich erweist, so dass derartige Leistungsmerkmale in kleinen Anlagen nicht oder nur selten zu finden sind. Es bestehen daher Ansätze, die Leistungsmerkmale großer Telekommunikationsanlagen für viele Kunden mit jeweils eigenen Teilnehmergruppen zentral bereitzustellen und so die Kosten der Leistungsmerkmale pro Teilnehmer in wirtschaftliche Bereiche zu führen. Zwei bekannte Ansätze dazu sind der Centrex Service im öffentlichen Netz der Deutschen Telekom AG in Deutschland, sowie der "Multi-Company"-Ansatz im Bereich der privaten Telekommunikationsanlagen.

Bei dem Dienst Centrex werden typische Leistungsmerkmale privater Telefonanlagen vom öffentlichen Netzbetreiber für viele Kunden zentral bereitgestellt. Der Dienst benutzt Eigenschaften privater Telefonanlagen und Eigenschaften des öffentlichen Netzes. Die Netzwerkintelligenz, d.h. die Steuerung der Leistungsmerkmale ist im öffentlichen Netzwerk und die Schnittstelle zwischen öffentlichem Netzwerk und privatem Netzwerk ist an einem virtuellen Ort mit der Funktion eines Gateways innerhalb des öffentlichen Netzes.

Der Multi-Company Ansatz im Bereich privater Netze basiert auf einer Telefonanlage an einem einzelnen Ort. In einer großen Einrichtung wird das Kommunikationssystem des Gebäudes oder der Einrichtung betrieben durch einen Netzwerkbetreiber wie die Anmelderin oder wie die Regus-Corporation, UK. Die Netzwerk-Intelligenz,ist in dem privaten Netzwerk auf dem Campus und der Übergang zum öffentlichen Netzwerk ist auch auf dem Campus. Das private Netzwerk kann mehrere private Telefonanlagen enthalten. Mehrere rechtlich unabhängige Kunden oder Mandanten können auf einer Telefonanlage eingerichtet werden. Ein Administrator des Netzwerkbetreibers der Einrichtung, der die Telefonanlage betreibt, implementiert vom Mandanten ausgewählte Leistungsmerkmale und stellt sie den Teilnehmern des Mandanten bereit. Die privaten Telefonanlagen nach dem Stand der Technik sind nicht konzipiert für eine derartige Benutzung, und daher ist es nicht möglich, alle möglichen Kombinationen von Leistungsmerkmalen für die einzelnen Mandanten individuell und simultan einzurichten. Daher bietet der Betreiber des Campus Netzwerkes Pakete von Leistungsmerkmalen an, die simultan eingerichtet und betrieben werden können. Bei einem bestehenden System ist die Anzahl der einrichtbaren Firmen auf 64 begrenzt und die Telefonanlage kennt den Begriff der Firma bzw. des Mandanten oder Kunden nicht. Dort erfolgt die vermittlungstechnische Abgrenzung der Kunden voneinander durch Anpassung bestehender Leistungsmerkmale, z.B. die Bildung von Verkehrsgruppen.

Zum Sprachgebrauch sei angemerkt, dass im Bereich der Telefonierdienste "Kunde" und "Mandant" sich entsprechen, wobei deren jeweils mehreren Teilnehmern jeweils ein Endgerät entspricht, wobei es aus der Perspektive der Anlage eine eindeutige Teilnehmeranschlussleitung zur Identifikation des Endgeräts und somit des Teilnehmers gibt. In der Vermittlungstechnik ist es üblich, den Begriff Teilnehmer gleichwertig für das Endgerät zu verwenden. Mit Hilfe eines Rufnummernplans wird der Zusammenhang zwischen der Teilnehmeranschlussleitung eines Endgeräts und der internen Rufnummer des Teilnehmers hergestellt.

Des Weiteren ist es bekannt, Telekommunikationsanlagen in einem Verbund von Telekommunikationsanlagen zu betreiben, wobei dieser Verbund durch digitale Verbindungsleitungen zwischen den einzelnen Telekommunikationsanlagen hergestellt wird. Als vermittelndes Protokoll wird auf diesen Leitungen entweder ein standardisiertes Protokoll (QSIG, DPNSS1) oder ein proprietäres Protokoll (TNET, CORNET...) eingesetzt. Telekommunikationsanlagen in einem Verbund haben Vorrichtungen, um die Benutzung der Leitung pro Verbindung und Verbindungsdauer zu tarifieren. Nach dem Stand der Technik besteht ein Verbund aus privaten Telekommunikationsanlagen, die alle einem einzigen Kunden zugeordnet sind.

Den bekannten Lösungen zum mandantenbezogenen Betrieb aus dem Bereich der privaten Telekommunikationsanlagen ist die Einschränkung gemeinsam, dass die Mandantenfähigkeit auf die einzelne Telekommunikationsanlage beschränkt ist. Zwar könnten diese Anlagen auch in einem Verbund von Telekommunikationsanlagen betrieben werden, aber eine verbundweite Funktion des Mehr-Kundenbetriebs ist nicht möglich. Es können z.B. Teilnehmer desselben Kunden nicht als diesem Kunden zugehörig erkannt werden, wenn die Endgeräte an verschiedenen Telekommunikationsanlagen des Verbundes angeschlossen sind. Dies ist insbesondere nachteilig, weil Verbindungen zwischen Endgeräten desselben Kunden anders behandelt werden als solche zwischen Endgeräten verschiedener Kunden. So werden Gespräche zwischen Endgeräten verschiedener Kunden wie Amtsgespräche betrachtet. Viele Firmen unterhalten jedoch neben ihrem Hauptsitz noch mehrere geografisch verteilte Niederlassungen, wobei viele Außenstellen häufig unter dem Aspekt der Endgerätezahl Größen aufweisen, die eine Integration eines solchen Standorts in eine mandantenfähige Telekommunikationsanlage vorteilhaft erscheinen lassen.

Private Telefonanlagen basieren auf der Technik privater Nebenstellenvermittlungsanlagen, im Gegensatz zu Vermittlungsstellen eines öffentlichen Netzwerks. Eine private Telefonanlage nach dem Stand der Technik weist einen Rufnummernplan auf, in dem die Teilnehmeranschlussleitungen der an die Telefonanlage angeschlossenen Endgeräte anlageninternen Rufnummern zugeordnet sind. Rufnummernpläne sind anlagenspezifisch und daher sind die anlageninternen Rufnummern im Allgemeinen begrenzt auf die Anlage eindeutig. Es ist möglich, die Rufnummernpläne mehrerer Anlagen eines Verbundes zu koordinieren mit dem Nachteil, dass wegen der größeren Teilnehmerzahl die Rufnummern in einzelnen Anlagen üblicherweise mehr Ziffern bekommen als für die an die jeweilige Anlage angeschlossenen Endgeräte notwendig wären. Nach dem Stand der Technik weist der Rufnummernplan einer Anlage keine Kennung der Anlage oder ihrer Zugangsleitung auf.

Der Kundenrufnummernplan einer mandantenfähigen Telekommunikationsanlage muss standortübergreifend eindeutig sein, obwohl die Standorte verschiedene Zugangsrufnummern haben. Dies ist insbesondere dann von Nachteil, wenn ein Kunde bereits separate Telekommunikationsanlagen an verschiedenen Standorten hat, und je Standort einen individuellen Rufnummernplan erzeugt hat. Hierbei passiert es leicht, dass eine Vielzahl von internen Rufnummern an verschiedenen Standorten mehrfach vergeben sind, da gerade kleine Telekommunikationsanlagen häufig einen kleinen Rufnummernvorat haben. Will der Kunde solche Standorte an eine zentrale Telekommunikationsanlage anschließen, so ist er gezwungen, den kundenindividuellen Rufnummernplan innerhalb dieser Anlage eindeutig zu gestalten, d.h. er muss einer Vielzahl von Endgeräten neue interne Rufnummern zuordnen.

Aus EP 0 557 644 ist schon ein Verfahren zum Betrieb einer mandantenfähigen privalen Telekommunikationsanlage bekannt. Diese Lösung ist jedoch nicht standortsübergreifend.

Es ist daher die Aufgabe der vorliegenden Erfindung, in einem mandantenfähigen Telekommunikationssystem auf der Basis privater Telekommunikationsanlagen die standortübergreifende Gliederung von Telekommunikationsteilnehmern in Bezug auf einen systemweit eindeutigen Kundenrufnummernplan zu verbessern.

Diese Aufgabe wird durch die Verfahren und eine Vorrichtung mit den Merkmalen der unabhängigen Patentansprüche gelöst. Bevorzugte Ausgestaltungen der Erfindung ergeben sich aus den abhängigen Ansprüchen.
Eine mandantenfähige Telekommunikationsanlage wird von mehreren Kunden mit einer Vielzahl von Endgeräten unabhängig voneinander genutzt, wobei jeder Kunde seine Endgeräte in Gruppen zusammenfassen kann, wobei alle Endgeräte einer Gruppe durch eine gemeinsame eindeutige Zugangsidentifikation gekennzeichnet sind. Dabei entsprechen die jeweiligen Gruppen von Endgeräten entweder einzelnen Niederlassungen und/oder organisatorischen Einheiten eines Kunden, oder ein Kunde selbst entspricht einem Service-Provider, wobei dann die Gruppen von Endgeräten den Kunden des Service-Providers entsprechen. Dabei verfügt die Telekommunikationsanlage über Mittel zum Speichern von Kundenidentifikationsnummern aller beteiligter Kunden und Zugangsidentifikationsnummern aller Endgerätegruppen. Dabei werden Kundenidentifikationsnummer und Zugangsidentifikationsnummer aus den E.164 Rufnummern der Endgeräte ermittelt, bzw. aus auswertungsrelevanten Teilen davon. Diese mandantenfähige Nebenstellenanlage hat vorzugsweise kundenindividuelle Rufnummernpläne, die je Kunde in endgerätegruppenindividuelle Rufnummernpläne unterteilt werden, wobei eine Nebenstellenrufnummer in der mandantenfähigen Telekommunikationsanlage mehrfach vergeben sein kann, und zwar max. einmal für jede Endgerätegruppe jedes Kunden. Verbindungen zwischen Endgeräten verschiedener Gruppen können dabei, auch kundenübergreifend, sowohl vollständig innerhalb der Nebenstellenanlage als auch über das öffentliche Netz abgewickelt werden.

Die Anmelderin hat eine private Vermittlungsanlage entwickelt, bei der mehrere Kunden mit jeweils einer Vielzahl von Endgeräten die Vermittlungsanlage unabhängig voneinander nutzten können, so als wäre nur ein einziger Kunde auf der privaten Vermittlungsanlage eingerichtet. Diese private Vermittlungsanlage stellt virtuelle private Telekommunikationsanlagen mit jeweils einer eigenen Datenhaltung und einer eigenen Datenzugriffsstruktur für jeden Kunden bereit. Eine solche virtuelle Anlage kann jedem Kunden bzw. Mandanten zugeordnet werden, und damit sind dessen Teilnehmer unabhängig und organisatorisch getrennt von den Teilnehmern anderer Kunden. Jeder Kunde hat einen kundenindividuell frei gestaltbaren durch den Kunden einrichtbaren KundenRufnummernplan zur Verfügung. Ein solches Kommunikationssystem kann auf der Basis einer privaten Telekommunikationsanlage eine beliebige Anzahl von Kunden mit jeweils einer beliebigen Anzahl von Teilnehmern vorsehen. Innerhalb der virtuellen Anlage eines Kunden sind Leistungsmerkmale sowohl kundenweit als auch individuell für dessen Teilnehmer einrichtbar. Dies geschieht weitgehend durch einen Administrator des Kunden selber, z.B. die Vergabe von Teilnehmerberechtigungen, insbesondere im Zusammenhang mit Amtsverkehr oder bei der Nutzung von Leistungsmerkmalen. Die Einrichtung und Änderung von einigen Daten innerhalb der virtuellen Anlage bleibt dem Systemadministrator vorbehalten. Dies ist z.B. die Konfigurierung des Verkehrs zwischen virtuellen Anlagen verschiedener Kunden und das Freischalten und Sperren von Hardwareadressen. In dieser privaten Vermittlungsanlage ist jedem Kunden eine Kundenidentifikationsnummer zugeordnet. Die Kundenidentifikationsnummer ermöglicht die kundenindividuelle Einrichtung virtueller Telefonanlagen.

Zum Sprachgebrauch seien einige Begriffe erläutert. Eine Kundenidentifikationsnummer KID ist eine Identifikationsnummer, die eindeutig einem Kunden zugeordnet ist und somit eine eindeutige Zuordnung eines Endgerätes zu einem Kunden herstellt.

Eine Zugangs-Rufnummer ist eine Ziffernfolge, die den eindeutigen Zugang zu einem spezifischen Rufnummernplan verschafft und mit Hilfe derer jede interne Rufnummer dieses Rufnummernplanes außerhalb dessen Gültigkeitsgrenzen eindeutig wird. Die Zugangs-Rufnummer kann sowohl eine öffentliche als auch eine private sein. Die öffentliche setzt sich zusammen aus Ländercode, Städtecode und Anlagencode. Die private aus Level2-Code, Level1-Code und Local Code. Die öffentliche Zugangs-Rufnummer hat, sofern alle Komponenten enthalten sind, weltweite Eindeutigkeit. Die private Zugangs-Rufnummer hat nur innerhalb einer des privaten Telekommunikationsanlagesystems Gültigkeit und wird vom Betreiber definiert.

Eine Zugangsidentifikation ZID ist eine Identifikationsnummer, die eindeutig einer Zugangs-Rufnummer zugeordnet ist und somit eine eindeutige Zuordnung eines Endgerätes zu einer Zugangs-Rufnummer herstellt. Die Kombination dieser Zugangsidentifikation mit einer internen Rufnummer macht diese Rufnummer im gesamten Telekommunikationsnetz (im öffentlichen Nummerierungsplan weltweit) eindeutig. Die Zugangsidentifikation ZID ist Teil der Erweiterung des System-weiten Rufnummernplans gemäß der Erfindung.

Ein Standort bedeutet in diesem Zusammenhang eine Gruppe von Endgeräten mit einer gemeinsamen Zugangs-Rufnummer.

Eine Niederlassung ist eine Gruppe von Endgeräten eines Kunden mit einer gemeinsamen Zugangs-Rufnummer. Man spricht dann von einer Niederlassung dieses Kunden. Eine Niederlassung eines Kunden lässt sich eindeutig über die Kundenidentifikationsnummer KID in Kombination mit einer Zugangsidentifikation als eindeutigem Index für die Zugangs-Rufnummer bestimmen, wobei eine Zugangsidentifikation verschiedenen Kunden zugeordnet sein kann, wenn diese die gleiche Zugangs-Rufnummer haben.

Nach dem Stand der Technik haben Kunden eines Telekommunikationsnetzwerkbetreibers separate auf privater Technik basierende Telekommunikationsanlagen für jede Niederlassung.

Die oben beschriebene Telekommunikationsanlage der Anmelderin ermöglicht mehrere Kunden mit jeweils mindestens einer Zugangsrufnummer und einem kundenindividuellen nicht notwendig zugangsrufnummerindividuellen Rufnummernplan in einer Telekommunikationsanlage.

Erfindungsgemäß wird der kundenindividuelle Rufnummernplan um eine Mehrfachvergabe von Internrufnummern je Kunde erweitert. Mehrere Kunden mit mehreren Zugangsrufnummern und mehreren zugangsrufnummerindividuellen kundenindividuellen Rufnummernplänen in einer Telekommunikationsanlage ermöglichen die Mehrfachvergabe von Internrufnummern je Kunde.

Die vorliegende Erfindung betrifft die Verbesserung der standortübergreifenden Gliederung von Telekommunikationsteilnehmern in Bezug auf einen systemweit eindeutigen Kundenrufnummernplan in einem mandantenfähigen Telekommunikationssystem auf der Basis privater Telekommunikationsanlagen. Die Erfindung ist unabhängig von der Ausgestaltung der oben beschriebenen mandantenfähigen privaten Telekommunikationsanlage.

In dem erfindungsgemäßen Verfahren zum Betrieb eines Telekommunikationssystems, welches von mehreren unabhängigen Kunden des Telekommunikationssystems mit jeweils mehreren an das Kommunikationssystem angeschlossenen Endgeräten unabhängig voneinander genutzt wird, ist einem Kunden eine eindeutige Kundenidentifikation KID zugeordnet. Der Kunde bildet mehrere Endgerätegruppen mit eindeutiger Zugangsidentifikation ZID mit dem Kunden zugeordneten Endgeräten. Das Kommunikationssystem weist kundenindividuelle Rufnummernpläne auf, die um die Zugangsidentifikation ZID erweiterte teilidentische Kunden-Endgerätegruppen-Rufnummernpläne aufweisen.

In einer vorteilhaften Ausgestaltung des Verfahrens ermittelt ein Dispatcher eine KID und eine ZID aus den auswertungsrelevanten Teilen einer Rufnummer.

Das erfindungsgemäße Verfahren zur Konfiguration eines Telekommunikationssystems, welches von mehreren unabhängigen Kunden des Telekommunikationssystems mit jeweils mehreren an das Kommunikationssystem angeschlossenen Endgeräten unabhängig voneinander genutzt wird, weist in einer Telekommunikationsanlage des Telekommunikationssystems die Verfahrensschritte auf:
- Zuordnen einer Kundenidentifikationsnummer KID zu jedem Kunden;
- Zuordnen einer Zugangsidentifikation ZID zu einer Gruppe von Endgeräten
- Speichern der auswertungsrelevanten Teile von E.164-Rufnummern von an der Anlage angeschlossenen Teilnehmern, die zur Bestimmung von ZID und KID erforderlich sind, als Dispatcher-Nummern;
- Zuordnen der ZID und KID zu den Dispatcher-Nummern.
   Vorzugsweise werden Zugangsidentifikationen ZID jeder Gruppe von Endgeräten zugeordnet.
   Eine vorteilhafte Ausgestaltung des Verfahrens zur Konfiguration enthält den weiteren Verfahrensschritt
- Erstellen einer Tabelle, die zu jeder Kombination KID/ZID diejenigen Kombinationen KID/ZID aufweist, bei denen ein anlageninterner Verkehr zwischen den Teilnehmern erlaubt ist.

Die erfindungsgemäße Dispatcher-Software in einem Telekommunikationssystem, welches von mehreren unabhängigen Kunden des Telekommunikationssystems mit jeweils mehreren an das Kommunikationssystem angeschlossenen Endgeräten, die in Endgerätegruppen zusammengefasst sind, unabhängig voneinander genutzt wird, dient zur Identifizierung eines Kunden und einer Endgerätegruppe anhand einer dem_Kunden zugeordneten Kundenidentifikationsnummer KID und einer der Endgerätegruppe zugeordneten Zugangsidentifikation ZID, wobei die Identifizierung von Kunde und Endgerätegruppe mit Hilfe von in einer Telekommunikationsanlage gespeicherten Dispatcher-Nummern, nämlich denjenigen Teilen von E.164-Rufnummern von an einer Telekommunikationsanlage angeschlossenen Teilnehmern, die zur Bestimmung der KID und ZID erforderlich sind, anhand einer mit dem Anruf übermittelten Rufnummer erfolgt.

Eine Telekommunikationsanlage enthält diese Dispatcher-Software, wobei die Telekommunikationsanlage vorzugsweise für jede Kombination KID/ZID von rufendem und gerufenem Teilnehmer eine Tabelle mit der Information aufweist, ob die Verbindung anlagenintern oder über das öffentliche Netz erfolgen soll.

Das erfindungsgemäße Adressierungsverfahren basiert auf der Umsetzung von eindeutigen öffentlichen oder privaten Adressen in interne Rufnummern des kundenindividuellen Rufnummernplanes, wobei jede dieser Rufnummern mit der Zugangsidentifikation versehen wird. Damit wird ein Adressierungsverfahren geschaffen, mit dem beliebige bestehende Rufnummernpläne aus Telekommunikationsanlagen verschiedener Standorte in einer Telekommunikationsanlage zu einem eindeutigen kundenindividuellen Rufnummernplan zusammengefasst werden können, ohne die Rufnummernpläne der Standorte verändern zu müssen.

Mit der eindeutigen Beziehung zwischen auswertungsrelevantem Teil der Rufnummer und KID kann die erfindungsgemäße Telekommunikationsanlage zu jedem Verbindungswunsch feststellen, ob ein kundeninterner Verkehr vorliegt. Mit einer Endgerätegruppe zu Endgerätegruppe Routing Tabelle, die zu jeder Kombination KID/ZID diejenigen Kombinationen KID/ZID aufweist, für deren zugeordnete Teilnehmer der Endgerätegruppen ein anlageninterner Verkehr erlaubt ist, kann die erfindungsgemäße Telekommunikationsanlage weiterhin bestimmen, ob bei einem Verbindungswunsch eine Verbindung zu einem öffentlichen Netzwerk erforderlich ist. Im Zusammenhang mit dieser Erfindung bedeutet "anlageninterner Verkehr", dass ausschließlich Ressourcen der Telekommunikationsanlage für eine Verbindung benutzt werden.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
FIG. 1 eine schematische Darstellung eines erfindungsgemäßes Kommunikationssystems gemäß der Erfindung;
FIG. 2 ein Ablaufdiagramm eines Verfahrens zur Konfiguration eines Telekommunikationssystems gemäß der Erfindung;
FIG. 3 ein Ablaufdiagramm eines Verfahrens zum Betrieb eines Telekommunikationssystems gemäß der Erfindung;

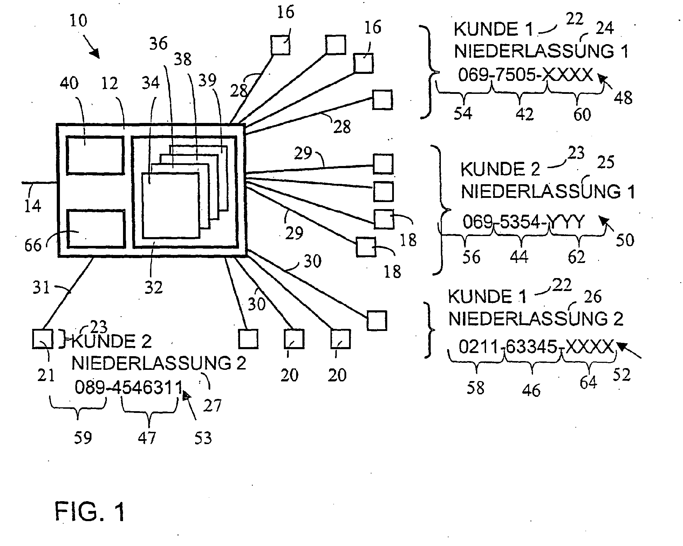

FIG. 1 zeigt schematisch ein erfindungsgemäßes Kommunikationssystem 10 mit einer zentralen Kommunikationsanlage 12, die über eine Leitung 14 an ein öffentliches Netz angeschlossen ist. An die Kommunikationsanlage 12 sind Endgeräte 16, 18, 20, 21, die Teilnehmer verschiedener Kunden 22, 23 repräsentieren, angeschlossen. Kunde 22 hat Endgeräte der Niederlassungen 24, 26 über Leitungen 28, 30 an die Kommunikationsanlage 12 angeschlossen und Kunde 23 hat Endgeräte der Niederlassungen 25, 27 über Leitungen 29, 31 die Kommunikationsanlage 12 angeschlossen. Die Endgeräte 16, 18, 20, 21 sind beliebige in einem Telekommunikationsnetz betreibbare Endgeräte wie analoges Telefon, ISDN-Telefon, Systemtelefon, IP-Telefon, Faxgerät, Anrufbeantworter. Zur Verwaltung der voneinander völlig unabhängigen Kunden 22, 23 weist die Kommunikationsanlage 12 eine Einrichtung 32 zur Bereitstellung eines kundenindividuell frei gestaltbaren Rufnummernplans auf, wobei ein Kunde auch Gruppen von Endgeräten mit teilidentischen Gruppen-Rufnummernplänen einrichten kann. Diese Einrichtung zur Bereitstellung des Rufnummernplans 32 basiert auf einer privaten Telefonanlage und ist zur Trennung von den verschiedenen Kunden und Kundengruppen zugeordneten Datenbereichen eingerichtet. Aufgrund der Trennung der verschiedenen Datenbereiche wirkt die Einrichtung zur Bereitstellung des Rufnummernplans 32 als jeweils eine virtuelle private Telefonanlage 34, 36, 38, 39 für jede der Niederlassungen 24, 25, 26, 27.

Die Endgeräte 16, 20 der Niederlassungen 24, 26 bilden hier jeweils eine Gruppe von Teilnehmern des Kunden 22. Die Endgeräte 18, 21 der Niederlassungen 25, 27 bilden jeweils eine Gruppe von Teilnehmern des Kunden 23. Die Kunden beziehungsweise deren Gruppen nutzen das Kommunikationssystem 10 unabhängig voneinander mit einem kundenindividuell frei gestaltbaren durch den Kunden einrichtbaren KundenRufnummernplan mit teilidentischen Endgerätegruppenrufnummernplänen. Die Gruppen müssen nicht Niederlassungen entsprechen, häufig werden jedoch Niederlassungen als Organisationseinheiten betrachtet.

Die zentrale Kommunikationsanlage 12 weist weiterhin eine Einrichtung 40 zum Einrichten mindestens einerkundenindividuellen Zugangsrufnummer gemäß E.1 64 bezüglich des öffentlichen Netzwerkes aus, unter der der Kunde über das öffentliche Netz anwählbar ist. Die Wahl ist die Übermittlung der eindeutigen E.164 Rufnummer. Eine weltweit eindeutige Rufnummer 48, 50, 52, 53 besteht gemäß E.164 aus einer Zugangs-Rufnummer eines Kunden bezüglich des öffentlichen Netzes und gegebenenfalls einer internen Teilnehmernummer 60, 62, 64. Das Attribut "intern" bedeutet, dass dieser Teil einer E.164 Rufnummer innerhalb einer Telekommunikationsanlage für vermittlungstechnische Steuerungsaufgaben ausreichend ist. Die Zugangs-Rufnummer bezüglich des öffentlichen Netzes besteht aus der Rufnummer des Kunden 42, 44, 46, 47 im jeweiligen Ortsnetz und gegebenenfalls zusätzlichen Rufnummern 54, 56, 58, 59 für das Ortsnetz und gegebenenfalls das Land des Kunden, um innerhalb des öffentlichen Netzes Eindeutigkeit zu erzielen. Die Niederlassung 2 des Kunden 2 weist die Besonderheit auf, dass dieser Kunde 2 in seiner Niederlassung 2 nur ein Endgerät 21 betreibt, und daher die Rufnummer 53 der Niederlassung 2 des Kunden 2 mit der Zugangs-Rufnummer bezüglich des öffentlichen Netzes 59+47 identisch ist. Damit ist in der der Niederlassung 2 entsprechenden Gruppe von Endgeräten nur ein Endgerät. In diesem Fall ist keine Unterscheidung von Teilnehmern des Kunden notwendig. Bei Gruppen von Endgeräten mit mehreren Teilnehmern wie Niederlassung 1 und 2 des Kunden 1 und Niederlassung 1 des Kunden 2 werden die Teilnehmer identifiziert durch Teilnehmernummern 60, 64, 62.

Einerseits ist ein Endgerät mit seiner internen Rufnummer innerhalb einer Telekommunikationsanlage eindeutig identifizierbar, andererseits ist bei der Aufteilung einer Telekommunikationsanlage in mehrere virtuelle Telekommunikationsanlagen die interne Rufnummer nicht mehr ausreichend, da eine interne Rufnummer bei mehreren Kunden in mehreren Gruppen auftreten kann. Daher wird in der oben vorgestellten Telekommunikationsanlage jedes Endgerät unter der Rufnummer verwaltet, die ihm im Rufnummernplan E.164 zugewiesen ist.

Beispielsweise existieren sowohl in der Niederlassung 1 des Kunden 1 als auch in der Niederlassung 2 des Kunden 1 Nebenstellen mit der kunden-internen Rufnummer "4711". Niederlassung 2hat den Zugangscode "63345" im Ortsnetz und Niederlassung 1 hat den Zugangscode "7505". Die Telekommunikationsanlage hat Endgeräte von Kunden aus Deutschland (Internationaler Zugangscode "49") aus dem Örtsnetzbereich Frankfurt (Ortsnetzkennziffer "69") und aus dem Ortsnetzbereich Düsseldorf (Ortsnetzkennziffer "211") angeschaltet. Daraus ergibt sich für die Nebenstelle "4711" jeweils beim Kunden 1 in der Niederlassung 2 die innerhalb der realen Telekommunikationsanlage eindeutige Rufnummer: + 49 69 63345 4711, und in der Niederlassung 1 die innerhalb der realen Telekommunikationsanlage eindeutige Rufnummer: + 49 69 7505 4711.

Demzufolge ist es innerhalb einer einzelnen Telekommunikationsanlage möglich, eine Kundenzugehörigkeit und Endgerätegruppenzugehörigkeit aus einer Rufnummer eindeutig zu bestimmen, wobei sich aus der Konfiguration eines Endgerätes eines Kunden ebenfalls eindeutig dessen Zugangsrufnummer ableiten lässt. Eine Endgeräte-Hardware-Konfiguration bedeutet dabei die hardwaremäßige Zuordnung eines Teilnehmers bzw. Endgeräts zu dessen Zugangsrufnummer. Jedem Kunden einer Telekommunikationsanlage wird in der Konfiguration der Telekommunikationsanlage ein Integer-Wert zugewiesen, der als Kundenidentifikationsnummer KID bekannt ist und jeder Endgerätegruppe wird eine Zugangsidentifikationsnummer ZID zugewiesen

Die Kommunikationsanlage 12 weist weiterhin eine Einrichtung 66 zur Analyse und Zuordnung von Rufnummern auf, Dispatcher genannt. Diese Einrichtung 66 dient der Ermittlung der Kundenidentifikationsnummer aus einer Rufnummer eines eingehenden Rufs.

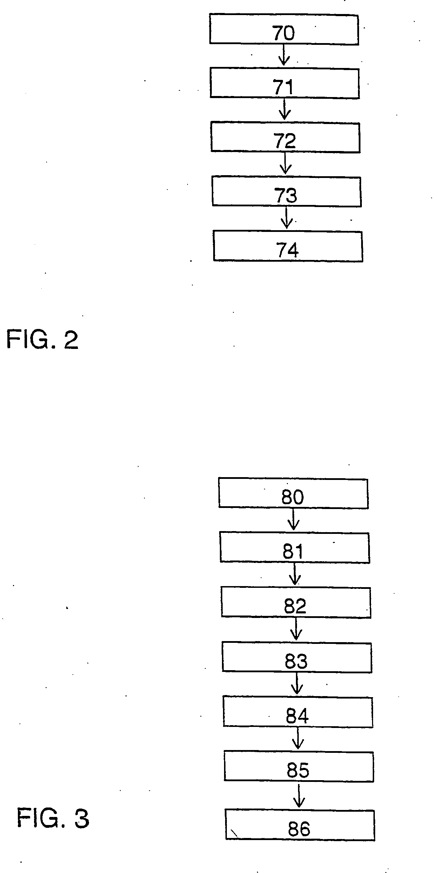

Mit Hilfe der FIG. 2 - 3 folgt eine Beschreibung der erfindungsgemäßen Verfahrensschritte bei der Bearbeitung von Verbindungen im Multi-Corporate-Network. Es wird eine einzelne Telekommunikationsanlage mit folgenden Eigenschaften betrachtet:

Endgeräte können direkt angeschaltet sein, wobei auch hier unterschiedliche Zugangsnummern möglich sind, jedoch eine räumliche Einschränkung gegeben ist.

Endgeräte können über paketvermittelnde Zugangsnetze angeschaltet sein, wie z.B. ATM oder IP. Damit wird auch die Überwindung weiterer Strecken als beim unmittelbaren Leitungsanschluss möglich.

Es gibt eine oder mehrere Zugangsleitungen zum öffentlichen Netz (PSTN).

Es sei darauf hingewiesen, dass der Begriff Endgeräte auch angeschaltete Server, wie z.B. Fax-Server oder Voice-Mail-Server beinhaltet.

Zunächst wird die kommende Signalisierung von Rufnummern an Leitungen betrachtet. Da eine Amtsleitung, die von verschiedenen Kunden genutzt wird, keinem einzelnen dieser Kunden zugeordnet sein kann muss man bei einem kommenden Amtsgespräch über die in die Anlage hineingewählte Zielrufnummer den gewünschten Kunden ermitteln. Gleiches ist z.B. notwendig, wenn ein Endgerät eines Kunden die Rufnummer eines Endgerätes des gleichen Kunden in einer anderen Niederlassung mit der Zugangs-Rufnummer wählt. Hierzu ermittelt man zunächst die Zugangs-Rufnummer und die zugehörige Zugangsidentifikation. Sofern es mehrere Kunden mit derselben Zugangs-Rufnummer gibt, wird auch noch ein Teil oder die komplette interne Rufnummer bewertet, um daraus die KID des Kunden zu bestimmen. Die Zugangs-Rufnummer wird aus der Zielnummer gelöscht. Stattdessen werden zur Erhaltung der Eindeutigkeit der Rufnummer zwei Sonderelemente zugefügt: Die Kundenidentifikationsnummer KID und die Zugangsidentifikationsnummer ZID. Das sind Verfahrensschritte zur Wahl/Vermittlung.

Die Ermittlung der Zugangsidentifikation im Betrieb erfolgt durch Vergleich der vom Amt erhaltenen Zielrufnummer mit den in einer im System abgelegten Tabelle enthaltenen Zugangs-Rufnummern. Dabei ist die Codierung der Zielrufnummer von besonderer Bedeutung. Sie enthält die Elemente Numbering Plan Identifier (NPI), der in der Regel an der Amtsleitung immer auf "ISDN" steht, und Type Of Number (TON). Steht der TON auf "international", so bedeutet dies, dass der Ländercode enthalten ist, und somit der Vergleich in der Tabelle ab dem Feld "Länder-Code" stattfinden muss. Steht der TON auf "national", so heißt dies, dass der Ländercode nicht enthalten ist, sondern nur der Städte- und Anlagencode. Somit hat der Vergleich in der Tabelle ab dem Feld "Städte-Code" zu erfolgen. Steht der TON auf "Subscriber", so ist ab dem Feld "Anlagen-Code" zu vergleichen.

Ist die ermittelte Zugangsidentifikation nicht eindeutig einer KID zugeordnet, so ist zur Ermittlung der KID ein Vergleich der restlichen Ziffern aus der Zielrufnummer mit dem Fach "Interne Rufnummer" durchzuführen. Wird eine Übereinstimmung gefunden, so ist der Tabelle die zugehörige KID zu entnehmen.

Anschließend wird die interne Rufnummer, hier die Zielrufnummer, aus der die ermittelte Zugangs-Rufnummer entfernt wurde, mit entsprechenden Zusatzelementen KID, ZID versehen und so in den verbindungsteuernden Datenstrukturen abgespeichert bzw. für Datenzugriffe verwendet.

**Tabelle 1**

| Kommende Rufnummer | | | | KID | ZID |
|---|---|---|---|---|---|
| Zugangs-Rufnummer | | | Interne Rufnummer | | |
| Länder-Code | Städte-Code | Anlagen-Code | | | |
| 49 | 211 | 5354 | - | 3 | 1 |
| 49 | 69 | 7505 | 47 | 2 | 2 |
| 49 | 69 | 7505 | 48 | 3 | 2 |
| 49 | 69 | 5354 | - | 3 | 3 |
| ... | ... | ... | ... | ... | ... |

Tabelle 1 zeigt Kombinationen aus kommender Rufnummer, KID und ZID, wobei die kommende Rufnummer aus der Zugangs-Rufnummer und der internen Rufnummer besteht, und die Zugangs-Rufnummer aus Länder- Code, Städte-Code, und Anlagen-Code besteht.

**Tabelle 2**

| Öffentliche Rufnummer | | | | | | Interne Rufnummer | | | | |
|---|---|---|---|---|---|---|---|---|---|---|
| Ziffern | NPI | TON | KID | ZID | | Ziffern | NPI | TON | KID | ZID |
| 69-7505-4711 | ISDN | nat. | --- | --- | → | 4711 | --- | --- | 2 | 2 |
| 69-7505-48 | ISDN | nat. | --- | --- | → | 48 | --- | --- | 3 | 2 |
| 69-5354-4711 | ISDN | nat. | --- | --- | → | 4711 | --- | --- | 3 | 3 |
| 211-5354-4711 | ISDN | nat. | --- | --- | → | 4711 | --- | --- | 3 | 1 |
| | | | | | | | | | | |

Tabelle 2 zeigt Kombinationen aus öffentlicher Rufnummer und interner Rufnummer. Dabei besteht die öffentliche Rufnummer aus Ziffern und möglichen Signalisierungen NPI und TON und ist einer eindeutigen Kombination aus KID und ZID zugeordnet. Die interne Rufnummer besteht aus Ziffern und möglichen Signalisierungen NPI und TON und ist einer eindeutigen Kombination aus KID und ZID zugeordnet.

In diesen Beispielen hat der Kunde mit der KID 3 zwei Teilnehmer mit der internen Rufnummer 4711, jedoch in unterschiedlichen Niederlassungen.

Alles oben Genannte gilt im Übrigen auch für jede über eine Leitung erhaltene Rufnummer, wie z.B. Calling Party Number, Connected Number oder leistungsmerkmalspezifische Rufnummern.

Nun wird die gehende Signalisierung von Rufnummern an Leitungen betrachtet. Die internen Rufnummern nach dem erfindungsgemäßen Verfahren sind in der Regel nur dann eindeutig, wenn sie die Elemente KID und ZID, bzw. mindestens ZID, enthalten. Da diese Elemente aber nur innerhalb einer Telekommunikationsanlage gültig sind, müssen alle auf einer an die Telekommunikationsanlage angeschalteten Leitung gehend signalisierten Rufnummern derart angepasst werden, dass sie in der empfangenden Vermittlungseinrichtung oder dem empfangenden Endgerät weiterhin eindeutig sind. An die Leitung können sowohl weitere Vermittlungseinrichtungen, z.B. Amt, als auch Endgeräte, z.B. Telefonieendgeräte, Fax-Geräte, Server, angeschaltet sein.

Hierbei sind mehrere Varianten denkbar. Die interne Rufnummer ist der über die Leitung angeschalteten Vermittlungseinrichtung bzw. dem über die Leitung angeschalteten Endgerät bekannt und eindeutig, so dass die Zusatzelemente ZID und KID weggelassen werden können.

In einer anderen Variante ist die interne Rufnummer der über die Leitung angeschalteten Vermittlungseinrichtung bzw. dem über die Leitung angeschalteten Endgerät nicht bekannt oder nicht eindeutig, und die Bekanntheit bzw. Eindeutigkeit wird über die Umsetzung des Zusatzelementes ZID in eine der internen Rufnummer voranzustellende Zugangsnummer aus dem privaten Rufnummernplan (siehe ISO/IEC 11571) mit entsprechenden Zusatzelementen NPI (Numbering Plan Identifier = Private-NP) und TON (Type Of Number = Level2, Level1, Local oder Unknown) hergestellt.

In einer weiteren Variante ist die interne Rufnummer der über die Leitung angeschalteten Vermittlungseinrichtung bzw. dem über die Leitung angeschalteten Endgerät nicht bekannt oder nicht eindeutig, und die Bekanntheit bzw. Eindeutigkeit wird über die Umsetzung des Zusatzelementes ZID in eine der internen Rufnummer voranzustellende Zugangsnummer aus dem öffentlichen Rufnummernplan (siehe ITU-T Recommendation E.164) mit entsprechenden Zusatzelementen NPI (Numbering Plan Identifier = ISDN-NP) und TON (Type Of Number = International, National, Subscriber oder Unknown) hergestellt.

Wie bereits im Vorangegangenen beschrieben und wie man am Beispiel der Tabelle 1 sieht, lässt sich eine bestimmte Zugangsidentifikation eindeutig in eine Zugangsnummer umsetzen. Die auf Tabelle 2 bezogene Umsetzung ist in Tabelle 3 dargestellt.

**Tabelle 3**

| Interne Rufnummer | | | | | | Öffentliche Rufnummer | | | | |
|---|---|---|---|---|---|---|---|---|---|---|
| Ziffern | NPI | TON | KID | ZI | | Ziffern | NPI | TON | KID | ZI |
| 4711 | --- | --- | 2 | 2 | → | 69-7505-4711 | ISDN | nat. | --- | --- |
| 48 | --- | --- | 3 | 2 | → | 69-7505-48 | ISDN | nat. | --- | --- |
| 4711 | --- | --- | 3 | 3 | → | 69-5354-4711 | ISDN | nat. | --- | --- |
| 4711 | --- | --- | 3 | 1 | → | 211-5354-4711 | ISDN | nat. | --- | --- |
| | | | | | | | | | | |

Nun wird der Verkehr zwischen Niederlassungen eines Kunden beschrieben für den Fall keiner Überlappung der Rufnummernpläne der Niederlassungen. Hat ein Kunde über alle Niederlassungen hinweg einen eindeutigen internen Rufnummernplan, so ist es ausreichend, wenn ein Endgerät der einen Niederlassung die interne Rufnummer eines Endgerätes der anderen Niederlassung wählt, um dieses zu erreichen. Auch bei der Anzeige der Rufnummer des rufenden Endgerätes beim gerufenen Endgerät ist es ausreichend, die interne Rufnummer anzuzeigen, da diese eine eindeutige Information für das gerufene Endgerät darstellt. Wählt ein Endgerät eines Kunden eine interne Rufnummer, so wird diese automatisch um die KID des rufenden Endgerätes ergänzt. Aus der internen Rufnummer und der KID lässt sich eindeutig die ZID ermitteln.

Es kann aber auch die Wahl und Anzeige von Rufnummern niederlassungsübergreifend über den öffentlichen oder den privaten Nummerierungsplan erfolgen. Hierfür ist dann das Verfahren für überlappende interne Rufnummernpläne zu nutzen (siehe folgendes Kapitel).

Nun wird der Verkehr zwischen Niederlassungen eines Kunden beschrieben für den Fall der Überlappung der Rufnummernpläne der Niederlassungen. Überlappen die Rufnummernpläne verschiedener Niederlassungen eines Kunden, so sind die internen Rufnummern niederlassungsübergreifend nicht mehr eindeutig. D.h. sie müssen um eine öffentliche oder private Zugangsnummer ergänzt werden.

Wählt ein Endgerät eines Kunden eine interne Rufnummer, so wird diese automatisch um die KID und die ZID des rufenden Endgerätes ergänzt, d.h. es wird davon ausgegangen, dass das Endgerät ein anderes Endgerät des gleichen Kunden in der gleichen Niederlassung erreichen will.

Soll das Endgerät ein anderes Endgerät des gleichen Kunden in einer anderen Niederlassung erreichen, so muss das rufende Endgerät die Zugangs-Rufnummer (öffentlich oder privat) der Zielniederlassung mitwählen. Die Telekommunikationsanlage versucht, über das zuvor beschriebene Verfahren die KID und die ZID zu ermitteln. Sofern dies möglich ist (Zielendgerät ist an die Telekommunikationsanlage angeschaltet), ist die Zielrufnummer wieder eine interne Rufnummer mit KID und ZID. Mit dieser kann wieder ein interner Standardverbindungsaufbau durchgeführt werden.

Stimmt die KID und die ZID einer am gerufenen Endgerät anzuzeigenden Rufnummer mit der KID und ZID dieses gerufenen Endgerätes überein, so wird nur die interne Rufnummer angezeigt.

Andernfalls wird die Rufnummer nach dem oben beschriebenen Verfahren ergänzt.

FIG. 2 zeigt ein Ablaufdiagramm eines erfindungsgemäßen Verfahrens zur Konfiguration eines Telekommunikationssystems, welches von mehreren unabhängigen Kunden des Telekommunikationssystems mit jeweils mehreren an das Kommunikationssystem angeschlossenen Endgeräten unabhängig voneinander genutzt wird, wobei die Konfiguration in einer Anlage des Systems stattfindet. In Verfahrensschritt 70 wird jedem Kunden eine Kundenidentifikationsnummer KID zugeordnet. In Verfahrensschritt 71 wird eine Zugangsidentifikation ZID jeder Gruppe von Endgeräten zugeordnet. In Verfahrensschritt 72 werden die auswertungsrelevanten Teile von E.164-Rufnummern von an der Anlage angeschlossenen Teilnehmern, die zur Bestimmung von ZID und KID erforderlich sind, als Dispatcher-Nummern gespeichert. In Verfahrensschritt 73 findet das Zuordnen der ZID und KID zu den Dispatcher-Nummern statt.

Nach einer vorteilhaften Ausgestaltung der Erfindung wird in dem weiteren Verfahrensschritt 74 eine Tabelle erstellt, die zu jeder Kombination KID/ZID diejenigen Kombinationen KID/ZID aufweist, bei denen ein anlageninterner Verkehr zwischen den Teilnehmern erlaubt ist.

In einem erfindungsgemäßen Verfahren zum Betrieb eines Telekommunikationssystems, welches von mehreren unabhängigen Kunden des Telekommunikationssystems mit jeweils mehreren an das Kommunikationssystem angeschlossenen Endgeräten unabhängig voneinander genutzt wird, ist einem Kunden eine eindeutige Kundenidentifikation KID zugeordnet, bildet der Kunde mehrere Endgerätegruppen mit eindeutiger Zugangsidentifikation ZID mit dem Kunden zugeordneten Endgeräten und weist das Kommunikationssystem kundenindividuelle Rufnummernpläne auf, die um die Zugangsidentifikation ZID erweiterte teilidentische Kunden-Endgerätegruppen-Rufnummernpläne aufweisen.

Vorzugsweise ermittelt dabei ein Dispatcher eine KID und eine ZID aus auswertungsrelevanten Teilen einer Rufnummer.

FIG. 3 zeigt ein Ablaufdiagramm eines erfindungsgemäßen Verfahrens zum Betrieb des Telekommunikationssystems. In Verfahrensschritt 80 wird ein Anruf erhalten. In Verfahrensschritt 81 erfolgt die Ermittlung einer Kundenidentifikationsnummer KID aus einer mit dem Anruf übermittelten Rufnummer. In Verfahrensschritt 82 wird der Anruf der ermittelten Kundenidentifikationsnummer KID zugeordnet. In Verfahrensschritt 83 wird die Zugangsidentifikation ZID aus derselben Rufnummer ermittelt.

Nach einer vorteilhaften Ausgestaltung der Erfindung wird in dem weiteren Verfahrensschritt 84 ermittelt, ob das rufende Endgerät und das gerufene Endgerät zur selben Endgerätegruppe gehören.

In Verfahrensschritt 85 wird vorzugsweise ermittelt, ob eine Vermittlung zwischen dem rufenden Endgerät und dem gerufenen Endgerät anlagenintern erfolgen darf.

In dem weiteren Verfahrensschritt 86 werden Absender-KID und Absender-ZID aus der E.164 Rufnummer (bzw. auswertungsrelevanter Teile davon) des Absenders und der Ziel- KID und -ZID aus der E.164 Rufnummer (bzw. auswertungsrelevanter Teile davon) des Zielendgerätes abgeleitet. Vorteilhaft erfolgt die Ermittlung der KID mit Hilfe von in einer Telekommunikationsanlage gespeicherten Dispatcher-Nummern, nämlich denjenigen Teilen von E.164-Rufnummern von an das Telekommunikationssystem angeschlossenen Teilnehmern, die zur eindeutigen Bestimmung von KID und ZID erforderlich sind, anhand von Teilen einer mit dem Anruf übermittelten Rufnummer.

Vorzugsweise wird anlageninterner endgerätegruppenübergreifender Verkehr individuell zur Endgerätegruppe tarifiert. Endgerätegruppeninterner Verkehr kann auch endgerätegruppenindiviuell tarifiert werden.

Das Telekommunikationssystem weist vorteilhaft private Telekommunikationsanlagen auf und eine an einem Anruf beteiligte Telekommunikationsanlage kann bei endgerätegruppenübergreifendem nicht anlageninternem Verkehr sowohl KID als auch ZID von Anrufer und Angerufenem bestimmen.

Eine erfindungsgemäße Dispatcher-Software in einem Telekommunikationssystem, welches von mehreren unabhängigen Kunden des Telekommunikationssystems mit jeweils mehreren an das Kommunikationssystem angeschlossenen Endgeräten, die in Endgerätegruppen zusammengefasst sind, unabhängig voneinander genutzt wird, dient zur Identifizierung eines Kunden und einer Endgerätegruppe anhand einer dem Kunden zugeordneten Kundenidentifikationsnummer KID und einer der Endgerätegruppe zugeordneten Zugangsidentifikation ZID, wobei die Identifizierung von Kunde und Endgerätegruppe mit Hilfe von in einer Telekommunikationsanlage gespeicherten Dispatcher-Nummern, nämlich denjenigen Teilen von E.164-Rufnummern von an einer Telekommunikationsanlage angeschlossenen Teilnehmern, die zur Bestimmung der KID und ZID erforderlich sind, anhand einer mit dem Anruf übermittelten Rufnummer erfolgt.

Eine erfindungsgemäße Telekommunikationsanlage hat eine solche Dispatcher-Software und weist vorzugsweise auch für jede Kombination KID/ZID von rufendem und gerufenem Teilnehmer eine Tabelle mit der Information auf, ob die Verbindung anlagenintern oder über das öffentliche Netz erfolgen soll.

Mehrere Kunden können eine solche mandantenfähige Telekommunikationsanlage mit einer Vielzahl von Endgeräten unabhängig voneinander nutzen, wobei jeder Kunde seine Endgeräte in Gruppen zusammenfassen kann, wobei alle Endgeräte einer Gruppe durch eine gemeinsame eindeutige Zugangsidentifikation gekennzeichnet sind. Dabei entsprechen die jeweiligen Gruppen von Endgeräten entweder einzelnen Niederlassungen und/oder organisatorischen Einheiten eines Kunden, oder ein Kunde selbst entspricht einem Service-Provider, wobei dann die Gruppen von Endgeräten den Kunden des Senrice-Providers entsprechen. Dabei verfügt die Telekommunikationsanlage über Mittel zum Speichern von Kundenidentifikationsnummern aller beteiligter Kunden und Zugangsidentifikationsnummern aller Endgerätegruppen. Dabei werden Kundenidentifikationsnummer und Zugangsidentifikationsnummer aus den E.164 Rufnummern der Endgeräte ermittelt, bzw. aus auswertungsrelevanten Teilen davon. Diese mandantenfähige Nebenstellenanlage hat vorzugsweise kundenindividuelle Rufnummernpläne, die je Kunde in endgerätegruppenindividuelle Rufnummernpläne unterteilt werden, wobei eine Nebenstellenrufnummer in der mandantenfähigen Telekommunikationsanlage mehrfach vergeben sein kann, und zwar einmal für jede Endgerätegruppe jedes Kunden. Verbindungen zwischen Endgeräten verschiedener Gruppen können dabei, auch kundenübergreifend, sowohl vollständig innerhalb der Nebenstellenanlage als auch über das öffentliche Netz abgewickelt werden.

### Bezugszeichenliste

Kommunikationssystem 10
Kommunikationsanlage 12
Leitung 14
Endgeräte / Teilnehmer 16, 18, 20, 21
Kunden 22, 23
Niederlassungen 24, 25, 26, 27
Leitungen 28, 29, 30, 31
Einrichtung 32 zur Bereitstellung Rufnummernplan
Datenbereiche / virtuelle private Telefonanlage 34, 36, 38, 39
Einrichtung 40 zum Einrichten einer Zugangsrufnummer
Rufnummer 42, 44, 46, 47 im jeweiligen Ortsnetz
Rufnummer E.164 48, 50, 52, 53
Rufnummern 54, 56, 58, 59 für das Ortsnetz
Teilnehmernummern 60, 62, 64
Dispatcher 66 zur Analyse und Zuordnung
70 Zuordnen einer Kundenidentifikationsnummer KID zu jedem Kunden
71 Zuordnen einer Zugangsidentifikation ZID zu einer Gruppe von Endgeräten
72 Speichern der auswertungsrelevanten Teile von E.164-Rufnummern
73 Zuordnen der ZID und KID zu den Dispatcher-Nummern.
74 Erstellen einer Tabelle
80 Erhalten eines Anrufs
81 Ermittlung einer Kundenidentifikationsnummer
82 Zuordnen des Anrufs zur ermittelten Kundenidentifikationsnummer KID
83 Ermittlung der Zugangsidentifikation ZID aus derselben Rufnummer.
84 Ermittlung, ob das rufende Endgerät und das gerufene Endgerät zur selben Endgerätegruppe gehören.
85 Ermittlung, ob eine Vermittlung zwischen dem rufenden Endgerät und dem gerufenen Endgerät telekommunikationssystemintern erfolgen darf.
86 Ableiten der Absender-KID und Absender-ZID aus der E.164 Rufnummer des Absenders und der Ziel- KID und -ZID aus der E.164 Rufnummer des Zielendgerätes.

## Patentansprüche

1. Verfahren zum Betrieb eines Telekommunikationssystems (10) mit einer privaten Telekommunikationsanlage (12), welche von mehreren unabhängigen Kunden (22, 23) des Telekommunikationssystems mit jeweils mehreren an die Telekommunikationsanlage (12) angeschlossenen Endgeräten (16, 18, 20, 21) unabhängig voneinander genutzt wird, wobei einem Kunden eine eindeutige Kundenidentifikation KID zugeordnet ist, der Kunde mehrere möglich geographish verteilten Endgerätegruppen mit eindeutiger Zugangsidentifikation ZID mit dem Kunden zugeordneten Endgeräten bildet und
die Telekommunikationsanlage kundenindividuelle Rufnummernpläne aufweist, die um die Zugangsidentifikation ZID erweiterte teilidentische Kunden-Endgerätegruppen-Rufnummernpläne aufweisen, mit den Verfahrensschritten
- Erhalten (80) eines Anrufs;
- Ermittleln (81) einer Kundenidentifikationsnummer KID aus einer mit dem Anruf übermittelten Rufnummer;
- Zuordnen (82) des Anrufs zur ermittelten Kundenidentifikationsnummer KID;
- Ermittleln (83) der Zugangsidentifikation ZID aus derselben Rufnummer.

2. Verfahren nach Anspruch 1, wobei ein Dispatcher (66) eine KID und eine ZID aus auswertungsrelevanten Teilen einer Rufnummer ermittelt.

3. Verfahren nach Anspruch 1, mit dem weiteren Verfahrensschritt
- Ermittleln (84), ob das rufende Endgerät und das gerufene Endgerät zur selben Endgerätegruppe gehören.

4. Verfahren nach Anspruch 1 oder 3, mit dem weiteren Verfahrensschritt
- Ermittleln (85), ob eine Vermittlung zwischen dem rufenden Endgerät und dem gerufenen Endgerät telekommunikationssystemintern erfolgen darf.

5. Verfahren nach einem der Ansprüche 1,2 oder 4, mit dem weiteren Verfahrensschritt
- Ableiten (86) der Absender-KID und Absender-ZID aus der E.164 Rufnummer des Absenders und der Ziel- KI D und -ZID aus der E.164 Rufnummer des Zielendgerätes.

6. Verfahren nach einem der vorhergehenden Ansprüche, wobei die Ermittlung der KID mit Hilfe von in der Telekommunikationsanlage des Telekommunikationssystems gespeicherten Dispatcher-Nummern, nämlich denjenigen Teilen von E.164-Rufnummern von an das Telekommunikationssystem angeschlossenen Teilnehmern, die zur Bestimmung von KID und ZID erforderlich sind, anhand von Teilen einer mit dem Anruf übermittelten Rufnummer erfolgt.

7. Verfahren nach einem der vorhergehenden Ansprüche, wobei endgerätegruppenübergreifender Verkehr individuell zur Endgerätegruppe tarifiert wird.

8. Verfahren nach einem der vorhergehenden Ansprüche, wobei
endgerätegruppeninterner Verkehr endgerätegruppenindiviuell tarifiert wird.

9. Verfahren zur Konfiguration eines Telekommunikationssystems (10) mit einer privaten Telekommunikationsanlage (12), welche von mehreren unabhängigen Kunden des Telekommunikationssystems mit jeweils mehreren an die Telekommunikationsanlage (12) angeschlossenen Endgeräten unabhängig voneinander genutzt wird, wobei ein Kunde mehrere geographisch verteilten Endgerätegruppen mit dem Kunden zugeordneten Endgeräten bildet, mit den Verfahrensschritten in der Telekommunikationsanlage des Telekommunikationssystems
- Zuordnen (70) einer Kundenidentifikationsnummer KID zu jedem Kunden;
- Zuordnen (71) einer Zugangsidentifikation ZID zu einer Gruppe von Endgeräten
- Speichern (72) zumindest der Teile von E.164-Rufnummern von an der Anlage angeschlossenen Teilnehmern, die zur Bestimmung von ZID und KID erforderlich sind, hiernach als Dispatcher-Nummern bezeichnet;
- Zuordnen (73) der ZID und KID zu den Dispatcher-Nummern.

10. Verfahren nach Anspruch 9, mit dem weiteren Verfahrensschritt
- Erstellen (74) einer Tabelle, die zu jeder Kombination KID/ZID diejenigen
Kombinationen KID/ZID aufweist, bei denen ein anlageninterner Verkehr zwischen den Teilnehmern erlaubt ist.

11. Software, die, wenn sie auf einem Computer in einer Telekommunikationsanlage läuft, ein Verfahren nach einem der Ansprüche 1 bis 8 ausführt.

12. Telekommunikationsanlage mit einer Software nach Anspruch 11.

13. Telekommunikationsanlage nach Anspruch 12, wobei die Telekommunikationsanlage für jede Kombination KID/ZID von rufendem und gerufenem Teilnehmer eine Tabelle mit der Information aufweist, ob die Verbindung anlagenintern oder über das öffentliche Netz erfolgen soll.

## Claims

1. A procedure for operating a telecommunications system (10) with a private telecommunications switching system (12) used by several independent customers (22, 23) of the telecommunications system, independently of each other, each of them having several terminals (16, 18, 20, 21) connected to the telecommunications switching system (12),
wherein a unique customer identification KID is assigned to a customer,
the customer forming several possibly geographically distributed terminal groups with a unique access identification ZID, with terminals assigned to the customer, and
the telecommunications switching system including customer-specific call-number plans which include partially identical customer terminal-group call-number plans extended by the access identification ZID, comprising the procedure steps of
- receiving (80) a call;
- determining (81) a customer identification KID from a call number transmitted with the call;
- assigning (82) the call to the determined customer identification KID;
- determining (83) the access identification ZID from the same call number.

2. The procedure of claim 1, wherein a dispatcher (66) determines a KID and a ZID from evaluation-relevant parts of a call number.

3. The procedure of claim 1, comprising the additional procedure step of
- determining (84) whether the calling terminal and the called terminal belong to the same terminal group.

4. The procedure of claim 1 or 3, comprising the additional procedure step of
- determining (85) whether a connection is allowed to be established internally to the telecommunications system between the calling terminal and the called terminal.

5. The procedure of any of claims 1, 2 or 4, comprising the additional procedure step of
- deriving (86) the sender KID and sender ZID from the sender's E.164 call number and the destination KID and ZID, from the E.164 call number of the destination terminal.

6. The procedure of any of the preceding claims, wherein the KID is determined with the help of dispatcher numbers stored in the telecommunications switching system of the telecommunications system, namely those parts of E.164 call numbers of subscribers connected to the telecommunications system, which are necessary for determining the KID and the ZID, by means of parts of a call number transmitted with the call.

7. The procedure of any of the preceding claims, wherein a cross-terminal group traffic is tariffed individually for each terminal group.

8. The procedure of any of the preceding claims, wherein a traffic internal to the terminal group is tariffed individually to the terminal group.

9. A procedure for configuring a telecommunications system (10) with a private telecommunications switching system (12), used by several independent customers of the telecommunications system, each with several terminals connected to the telecommunications switching system (12), independently of each other, a customer forming several geographically distributed terminal groups with terminals assigned to the customer, comprising in the telecommunications switching system of the telecommunications system the procedure steps of
- assigning (70) a customer identification number KID to each customer;
- assigning (71) an access identification ZID to a group of terminals;
- storing (72) at least those parts of E-164 call numbers of subscribers connected to the switching system, which are necessary for determining the KID and the ZID, hereinafter called dispatcher numbers;
- assigning (73) the ZID and KID to the dispatcher numbers.

10. The procedure of claim 9, comprising the additional procedure step of
- drawing up (74) a table including for each KID/ZID combination those KID/ZID combinations for which a traffic internal to the switching system is allowed between the subscribers.

11. A software which, when running on a computer in a telecommunications switching system, performs a procedure according to any of claims 1 to 8.

12. A telecommunications switching system with a software according to claim 11.

13. The telecommunications switching system of claim 12, said telecommunications switching system including for each KID/ZID combination of calling and called subscriber a table containing the information whether a connection shall be established internally to the switching system or through the public network.

## Revendications

1. Procédure pour faire fonctionner un système de télécommunication (10) avec une installation de télécommunication privée (12) utilisée par plusieurs clients indépendants (22, 23) du système de télécommunication, indépendamment l'un de l'autre, avec plusieurs terminaux (16, 18, 20, 21) connectés à l'installation de télécommunication (12),
dans laquelle une identification de client univoque KID est assignée à un client,
le client formant plusieurs groupes de terminaux éventuellement distribués géographiquement avec une identification d'accès univoque ZID, avec des terminaux assignés au client, et
l'installation de télécommunication comprenant des plans de numéros d'appel spécifique au client, qui incluent des plans de numéros d'appel partiellement identiques de groupes de terminaux de clients, étendus par l'identification d'accès ZID, comprenant les opérations de procédure de
- réception (80) d'un appel;
- détermination (81) d'une identification de client KID à partir d'un numéro d'appel transmis avec l'appel;
- assignation (82) de l'appel à l'identification de client KID déterminé;
- détermination (83) de l'identification d'accès ZID à partir du même numéro d'appel.

2. Procédure selon la revendication 1, dans laquelle un dispatcher (66) détermine une KID et une ZID à partir de parties d'un numéro d'appel importantes pour l'évaluation.

3. Procédure selon la revendication 1, comprenant l'opération de procédure additionnelle de
- détermination (84) si le terminal appelant et le terminal appelé font partie du même groupe de terminaux.

4. Procédure selon la revendication 1 ou 3, comprenant l'opération de procédure additionnelle de
- détermination (85) s'il est permis d'établir une connexion interne au système de télécommunication entre le terminal appelant et le terminal appelé.

5. Procédure selon l'une quelconque des revendications 1, 2 ou 4, comprenant l'opération de procédure additionnelle de
- dérivation (86) de la KID de l'expéditeur et de la ZID de l'expéditeur, du numéro d'appel E.164 de l'expéditeur et de la KID et de la ZID de destination, du numéro d'appel E.164 du terminal de destination.

6. Procédure selon l'une quelconque des revendications précédentes, dans laquelle la KID est déterminée à l'aide de numéros de dispatcher enregistrés dans l'installation de télécommunication du système de télécommunication, à savoir les parties des numéros d'appel E.164 d'abonnés connectés au système de télécommunication, qui sont nécessaires pour déterminer la KID et la ZID, à l'aide de parties d'un numéro d'appel transmis avec l'appel.

7. Procédure selon l'une quelconque des revendications précédentes, dans laquelle un trafic concernant plusieurs groupes de terminaux est tarifié individuellement pour chaque groupe de terminaux.

8. Procédure selon l'une quelconque des revendications précédentes, dans laquelle un trafic interne au groupe de terminaux est tarifié individuellement pour chaque groupe de terminaux.

9. Procédure pour configurer un système de télécommunication (10) avec une installation de télécommunication privée (12), utilisée par plusieurs clients indépendants du système de télécommunication, indépendamment l'un de l'autre, avec plusieurs terminaux connectés à l'installation de télécommunication (12), un client formant plusieurs groupes de terminaux distribués géographiquement avec des terminaux assignés au client, comprenant les opérations de procédure suivantes dans l'installation de télécommunication du système de télécommunication:
- assignation (70), à chaque client, d'un numéro d'identification de client KID;
- assignation (71), à un groupe de terminaux, d'une identification d'accès ZID;
- enregistrement (72) d'au moins les parties des numéros d'appel E-164 d'abonnés connectés à l'installation, qui sont nécessaires pour déterminer la KID et la ZID, appelés dans ce qui suit numéros de dispatcher;
- assignation (73) de la ZID et de la KID aux numéros de dispatcher.

10. Procédure selon la revendication 9, comprenant l'opération de procédure additionnelle de
- constitution (74) d'une table comprenant pour chaque combinaison KID/ZID les combinaisons KID/ZID pour lesquelles un trafic interne à l'installation est permis entre les abonnés.

11. Logiciel qui, quand il tourne sur un ordinateur dans une installation de télécommunication, exécute une procédure selon l'une quelconque des revendications 1 à 8.

12. Installation de télécommunication avec un logiciel selon la revendication 11.

13. Installation de télécommunication selon la revendication 12, dite installation de télécommunication comprenant pour chaque combinaison KID/ZID d'abonné appelant et d'abonné appelé une table contenant l'information si une connexion doit être établie internement à l'installation ou par le réseau public de télécommunication.
